Europäisches Patentamt

European Patent Office

Office européen des brevets

(19)

(11) **EP 0 730 358 A1**

(12) **DEMANDE DE BREVET EUROPEEN**

(43) Date de publication:
04.09.1996 Bulletin 1996/36

(51) Int. Cl.$^6$: **H04L 7/00**, H04L 1/24

(21) Numéro de dépôt: 96200492.5

(22) Date de dépôt: **26.02.1996**

(84) Etats contractants désignés:
**DE FR GB**

(30) Priorité: **01.03.1995 FR 9502371**

(71) Demandeurs:
• **PHILIPS COMMUNICATION D'ENTREPRISE**
**75013 Paris (FR)**
Etats contractants désignés:
**FR**

• **PHILIPS ELECTRONICS N.V.**
**5621 BA Eindhoven (NL)**
Etats contractants désignés:
**DE GB**

(72) Inventeur: **Lepitre Didier**
**F-75008 Paris (FR)**

(74) Mandataire: **Chaffraix, Jean**
**Société Civile S.P.I.D.**
**156, Boulevard Haussmann**
**75008 Paris (FR)**

(54) **Système de contrôle d'une chaîne de transmission**

(57) Dans ce système de contrôle d'une chaîne de transmission comprenant un premier (1) et un deuxième (2) dispositifs terminaux, le premier dispositif (1) terminal est couplé à un dispositif d'émission (10) pour émettre une séquence de contrôle, le deuxième dispositif (2) terminal muni d'un accès d'entrée (20) et d'un accès de sortie (21) pour être connecté à un circuit utilisateur (50) comporte : une première (25) horloge fixant le rythme des données à fournir audit accès d'entrée, une deuxième horloge (26) pour fixer le rythme des données reçues à l'accès d'entrée, un circuit de rebouclage (30-55-31) pour relier lesdits accès d'entrée (20) et de sortie (21).

En outre, il est prévu des moyens (60, ...) mis en oeuvre lors du contrôle, pour faire concorder lesdites horloges et le circuit de rebouclage comporte un dispositif de mémoire (55) pour emmagasiner une partie au moins de la séquence de contrôle pendant la mise en concordance des horloges émission et réception.

Application : transmission de données numériques.

FIG.1

## Description

La présente invention concerne un système de contrôle d'une chaîne de transmission comprenant au moins un premier et un deuxième dispositifs terminaux, système dans lequel :

- le premier dispositif terminal est couplé à un dispositif d'émission pour émettre une séquence de contrôle,
- est prévu un milieu de transmission pour relier les dispositifs terminaux,
- le deuxième dispositif terminal muni d'un accès d'entrée et d'un accès de sortie pour être connecté à un circuit utilisateur comporte :

  • une première horloge fixant le rythme des données à fournir audit accès d'entrée,
  • une deuxième horloge pour fixer le rythme des données reçues à l'accès d'entrée,
  • un circuit de rebouclage pour relier lesdits accès d'entrée et de sortie,

L'invention concerne aussi les modems qui peuvent constituer lesdits dispositifs terminaux.

Pour contrôler le bon fonctionnement des modems, il est connu de les reboucler sur eux-mêmes. On pourra à ce sujet consulter la demande de brevet n° 2 631 194 déposée en France le 6 mai 1988.

Un des problèmes qui se pose lors de ces rebouclages est du à l'indépendance des horloges d'émission et de réception. On s'impose en effet que le bouclage ne doit pas faire perdre de données de rebouclage. Or, celles-ci peuvent être perdues même pour un saut de phase inférieur de T/2 (T étant la période des signaux d'horloge) qui se produit à la réémission de ces données de rebouclage. Cette perte survient nécessairement pour des modulations très resserrées du type préconisé par la norme V34 et entraîne des resynchronisations. A haut débit conforme à cette norme, un saut de phase de quelques degrés seulement peut provoquer une resynchronisation.

La présente invention propose un système du genre décrit dans le préambule qui permet ce rebouclage sans apparition de processus de resynchronisation.

Pour cela, un tel système est remarquable en ce qu'il est prévu des moyens mis en oeuvre lors du contrôle, pour faire concorder lesdites horloges et en ce que le circuit de rebouclage comporte une dispositif de mémoire pour emmagasiner une partie au moins de la séquence de contrôle pendant la mise en concordance des horloges émission et réception.

La description suivante faite en regard des dessins ci-annexés, le tout donné à titre d'exemple non limitatif, fera bien comprendre comment l'invention peut être réalisée.

La figure 1 montre un système conforme à l'invention.

La figure 2 montre en détail un deuxième dispositif terminal faisant partie du système montré à la figure 1.

Les figures 3 et 4 représentent des organigrammes expliquant le fonctionnemnt du système de l'invention.

La figure 5 montre les signaux des première et deuxième horloges du dispositif terminal de la figure 2.

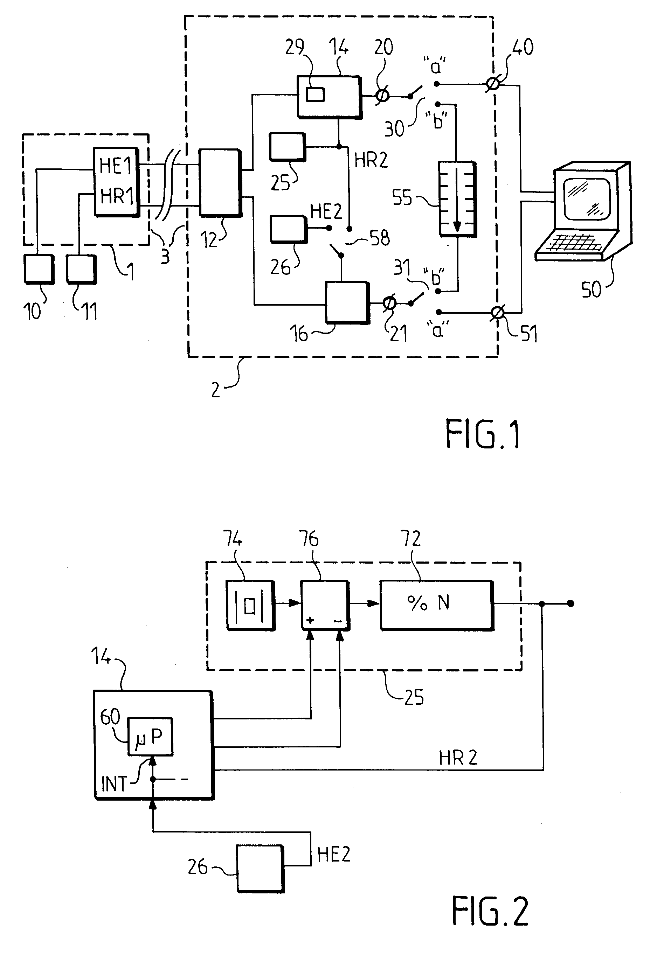

Le système montré à la figure 1 est formé d'un premier dispositif terminal constitué par un modem 1 qui communique avec un deuxième dispositif terminal constitué par un modem 2. Ces modems 1 et 2 sont reliés par un réseau téléphonique 3. On a montré sur la figure 1, les éléments du modem 2 nécessaires pour la mise en application de l'invention. Ce modem est formé d'un circuit d'interface 12 qui fait la liaison entre d'une part, le réseau téléphonique 3 et un circuit de démodulation 14 et, d'autre part, ce même réseau et un circuit de modulation 16. Les données démodulées apparaissent sur une borne 20 connectée à la sortie du circuit de démodulation 14 et les données à transmettre sont appliquées à un accès 21 relié à l'entrée du circuit de modulation 16. Des horloges 25 et 26 fournissent respectivement des signaux HR2 et HE2 qui pilotent la réception et l'émission de ces données modulées sur le réseau téléphonique 3. Le modem 2 peut comporter dans son circuit de démodulation 14 un égalisateur adaptatif transversal 29. Cet égalisateur pondère des répliques des données reçues, décalées dans le temps par un ensemble de coefficients. Ces coefficients sont ajustés pour que la valeur des données à sa sortie soit proche d'une des valeurs de seuil considérées comme les valeurs exactes des données transmises. Cet égalisateur n'a pas à être décrit plus en détail car il fait partie de la technique connue des égaliseurs.

Le premier modem 1 permet à des équipements de test 17 et 18 de tester toute la chaîne de transmission et notamment le modem 2. L'équipement 30 émet des séquences de test et l'équipement 31 examine les séquences en retour à ces séquences de test pour déterminer le bon état de la liaison. Un des test consiste à reboucler sur lui-même le modem distant. Pour effectuer le test du modem 2, on a donc prévu des moyens de bouclage de la sortie 20 du modem sur son entrée 21. Ces moyens de bouclage sont constitués essentiellement par des commutateurs 30 et 31 à deux positions "a " et "b". En fonctionnement normal, ces commutateurs sont mis dans leur position "a" et relient, d'une part, la sortie 20 à un accès de branchement 40 pour l'entrée d'un terminal 50 et, d'autre part, l'entrée 21 à un autre accès 51 pour la sortie du terminal 50. En période de test, les commutateurs sont mis dans la position "b" de sorte que la sortie 20 est mise en relation, selon une mesure de l'invention, avec l'entrée 21 par l'intermédiaire d'une mémoire 55 du type connu sous le nom de mémoire FIFO (première donnée entrée, première donnée sortie).

En fonctionnement normal, les données issues du modem 1 sont transmises sur le réseau 3 avec une cadence définie par des signaux HE1 élaborée par l'horloge d'émission du modem 1 non représentée sur les figures. L'horloge de réception du modem 2 est synchronisée par les données transmises par le réseau téléphonique 3. Ces données sont ensuite utilisées par le terminal 50. Ce terminal envoie, en réponse aux messages qu'il reçoit, des données sur l'accès 51. Le rythme de transmission des données de retour du terminal 50 sur le réseau téléphonique est fixé par l'horloge émission 26. Ces données sont enfin reçues au niveau du modem 1 et synchronisent une horloge réception qui fournit des signaux HR1.

Le problème qui se pose provient du rebouclage décidé depuis le modem 1. Avant le rebouclage, on a en général :

$$HR2 \neq HE2$$

Pour ne pas perdre des données, il faut faire : $HR2 = HE2$. On s'impose aussi une exigence supplémentaire donnée par la norme V34 du C.C.I.T.T. qui interdit de faire varier trop précipitemment la phase des signaux d'horloge, ce qui n'est pas supportable pour les modulations de cette norme et perturberait profondément le fonctionnement des modems 1 et 2.

Pour résoudre ce problème, l'invention propose :

- de faire varier la fréquence et/ou la phase de l'horloge 25 de sorte à l'asservir à la fréquence et/ou la phase de l'horloge 26, et de la remplacer par l'horloge 25 par l'intermédiaire d'un commutateur 58, une fois que l'on détecte une correspondance de phase de ces deux horloges ;
- pendant cette phase de mise en correspondance, d'emmagasiner les données à reboucler dans la mémoire 55.

Les phénomènes intempestifs qui pourraient survenir lors de la phase de synchronisation sont supprimés par la présence de l'égaliseur adaptatif transversal 29.

La figure 2 montre un exemple d'implantation de l'invention. Le circuit de démodulation 14 est réalisé au moyen d'un microprocesseur 60. Ce microprocesseur 60 est muni d'une entrée INT pour recevoir des signaux d'interruption provenant de l'horloge d'émission 26. Ce microprocesseur 60 peut envoyer, durant la phase d'asservissement, des signaux pour ralentir ou accélérer l'horloge de réception 25. En fait l'accélération consiste à ajouter une impulsion au signal fourni par un quartz à haute fréquence 70 avant la division effectuée par un diviseur 72 et le ralentissement à supprimer une impulsion de ce quartz. Un circuit d'addition/suppression d'impulsion 76 effectue ces opérations. Il est muni d'une entrée (+) pour rajouter une impulsion et d'une entrée (-) pour en enlever une.

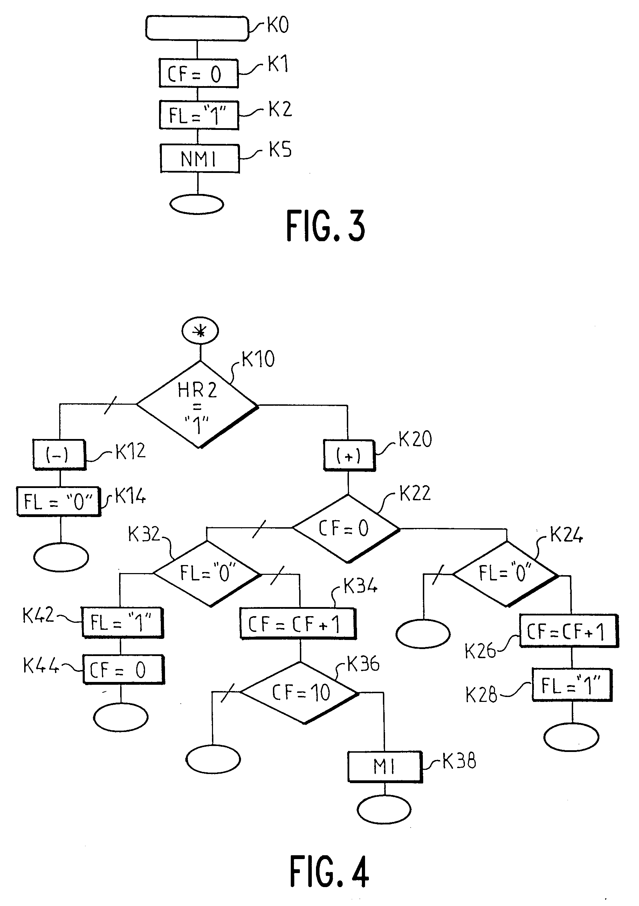

Pour effectuer cet asservissement, le microprocesseur 60 est programmé de la façon indiquée par les organigrammes des figure 3 et 4.

L' organigramme de la figure 3 est la phase d'initialisation et commence à la case K0 indiquant le programme de test ou de contrôle qui a été détecté par le modem 2. Les cases K1 et K2 qui suivent montrent l'initialisation d'un compteur CF et d'un drapeau FL qui est mis à la valeur "1". La case K5 indique que les signaux d'interruption appliqués à l'entrée INT du microprocesseur sont pris en compte.

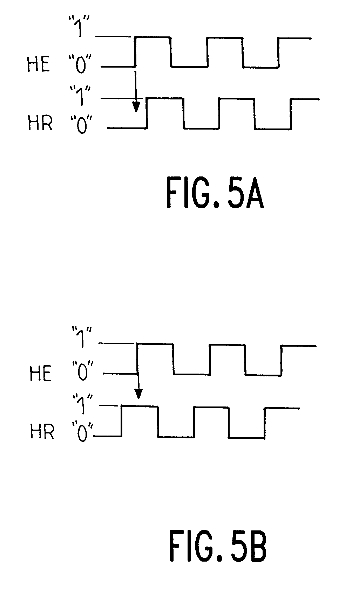

Les opérations représentées par l'organigramme de la figure 4 sont donc déclenchées par les signaux de l'horloge HE2 et plus précisemment par le front montant de ces signaux. La première opération (case K10) consiste alors à examiner le niveau logique du signal HR2. Si sa valeur est "0", on est dans le cas montré à la ligne A de la figure 5. On considère alors que le signal HR2 est en avance sur le signal HE2, il convient donc de retarder HR2. Pour cela, on passe à la case K12 où il est indiqué que l'on enlève une impulsion et de là, on va à la case K14 où le drapeau FL est mis à "0". Le programme d'interruption se termine alors en attendant un prochain front montant du signal HE2. Si le test de la case K10 indique une valeur de HR2 égale à "1", alors on est dans le cas représenté à la ligne B de la figure 5. On considère alors que le signal HR2 est en retard sur le signal HE2 et qu'il convient donc d'avancer le signal HR2. Pour cela, on passe à la case K20 où il est indiqué que l'on ajoute une impulsion et de là, on va à la case K22, où l'on teste la valeur du compteur CF. Si cette valeur est nulle, on teste ensuite la valeur du drapeau FL, à la case K24. Si cette valeur est "0", alors le contenu du compteur est incrémenté d'une unité (case K26) et le drapeau est mis à la valeur "1" (case K28). Le programme d'interruption est alors stoppé. Ce programme est aussi stoppé, si le test indiqué à la case K24 indique une valeur différente de "0" pour le drapeau FL, cette valeur ne peut être qu'égale à "1". Le test de la case K22 peut indiquer que le compteur CF a une valeur différente de 0. Alors on teste, à la case K32, la valeur du drapeau FL. Si cette valeur est différente de "0", alors on incrémente d'une unité le compteur CF (case K34). Si cette valeur est égale à 10, par exemple, ce qui est testé à la case K36, alors on estime que la synchronisation est effective et qu'il n'y a pas lieu de poursuivre le traitement. Pour cela, on masque l'interruption de sorte que le programme d'interruption ne sera plus déclenché (case K38). Si le test de la case K36 indique une valeur de CF différente de "0" donc nécessairement inférieure à 10, alors le programme d'interruption est stoppé en attendant un front prochain du signal HE2. Le test de la case K32 peut indiquer que la valeur du drapeau est "30", alors dans ce cas on réinitialise les valeurs de FL et CF aux cases K42 et K44.

Ainsi, par ce fonctionnement, on est assuré que, lorsqu'on substitue l'horloge d'émission à l'horloge de réception, il n'y aura pas une différence de phase inférieure à une demi-période d'horloge. Cette erreur de phase résiduelle sera d'autant plus petite que la fréquence du quartz est elevée (par exemple 36,864 MHz) et que donc la division sera effectuée avec un taux élevé (5000), pour un compte de CF = 10 (case K36). L'ordre d'erreur Er$\phi$ de cette phase peut être estimée.

$$Er\phi = 10/5000 = 1/500 \text{ de période.}$$

## Revendications

1. Système de contrôle d'une chaîne de transmission comprenant au moins un premier et un deuxième dispositifs terminaux, système dans lequel :

   - le premier dispositif terminal est couplé à un dispositif d'émission pour émettre une séquence de contrôle,
   - est prévu un milieu de transmission pour relier les dispositifs terminaux,
   - le deuxième dispositif terminal muni d'un accès d'entrée et d'un accès de sortie pour être connecté à un circuit utilisateur comporte :

     • une première horloge fixant le rythme des données à fournir audit accès d'entrée,
     • une deuxième horloge pour fixer le rythme des données reçues à l'accès d'entrée,
     • un circuit de rebouclage pour relier lesdits accès d'entrée et de sortie,

   système caractérisé en ce qu'il est prévu des moyens mis en oeuvre lors du contrôle, pour faire concorder lesdites horloges et en ce que le circuit de rebouclage comporte un dispositif de mémoire pour emmagasiner une partie au moins de la séquence de contrôle pendant la mise en concordance des horloges émission et réception.

2. Système de contrôle selon la revendication 1 caractérisé en ce que la concordance des horloges consiste à établir une correspondance entre leurs fronts.

3. Système de contrôle selon la revendication 2, caractérisé en ce que cette correspondance consiste :

   - à tester le niveau logique de la première horloge sur un front de la deuxième horloge,
   - à retarder ou à avancer la deuxième horloge en fonction de ce niveau logique,
   - à compter le nombre de fois que le niveau logique garde la même valeur sur les fronts de la deuxième horloge depuis un changement de niveau,
   - et à déclarer valable cette correspondance si ce nombre de fois devient égal à une certaine valeur.

4. Modem convenant à un système selon l'une des revendications 1 à 3, caractérisé en ce qu'il constitue un deuxième dispositif terminal.

FIG.1

FIG.2

K0

CF = 0 — K1

FL = "1" — K2

NMI — K5

## FIG. 3

(✻)

HR 2 = "1" — K10

(−) — K12

FL = "0" — K14

(+) — K20

CF = 0 — K22

K32 — FL = "0"

FL = "0" — K24

K42 — FL = "1"

CF = CF + 1 — K34

CF = CF + 1

K26 —

K44 — CF = 0

FL = "1" — K28

CF = 10 — K36

MI — K38

## FIG. 4

6

FIG. 5A

FIG. 5B

Office européen
des brevets

**RAPPORT DE RECHERCHE EUROPEENNE**

Numero de la demande

EP 96 20 0492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-31 42 115 (SIEMENS AG) 5 Mai 1983<br>* page 4, ligne 20 - page 6, ligne 7 *<br>* page 13, ligne 32 - page 15, ligne 4 *<br>* figures 3,4 *<br>--- | 1,4 | H04L7/00<br>H04L1/24 |
| A | CABLES ET TRANSMISSION, OCT. 1978, FRANCE,<br>vol. 32, no. 4, - Octobre 1978 ISSN<br>0007-9308,<br>pages 517-527, XP000565141<br>GRANIER S ET AL: "Systeme TRANSMIC<br>system: 6. Raccordement des abonnees a<br>2,4-4,8 et 9,6 kbit/s"<br>* page 321, ligne 1 - dernière ligne *<br>* page 322, alinéa 2.4; figure 4 *<br>--- | 1,2,4 | |
| A | EP-A-0 471 432 (COMPUTEC OY) 19 Février<br>1992<br>* colonne 1, ligne 46 - ligne 55 *<br>* colonne 2, ligne 54 - colonne 3, ligne<br>27; figure 2 *<br>--- | 1,4 | |
| A | PATENT ABSTRACTS OF JAPAN<br>vol. 014, no. 268 (E-0939), 11 Juin 1990<br>& JP-A-02 082834 (NEC CORP), 23 Mars 1990,<br>* abrégé *<br>----- | 1,4 | DOMAINES TECHNIQUES RECHERCHES (Int.Cl.6)<br><br>H04L<br>H04J |

Le présent rapport a été établi pour toutes les revendications

| Lieu de la recherche | Date d'achèvement de la recherche | Examinateur |
|---|---|---|
| LA HAYE | 7 Juin 1996 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant